# EUROPEAN PATENT APPLICATION

(11) **EP 4 589 830 A1**
(43) Date of publication of application: **23.07.2025**
(21) Application number: 23876522.6
(22) Date of filing: 25.09.2023
(51) Int. Cl.: H02M 3/156, H02M 3/158, H02M 1/08, H02M 1/32, H02M 1/44, H02M 7/48, H02J 3/38

(54) **DIRECT-CURRENT CONVERSION CIRCUIT AND PHOTOVOLTAIC INVERTER**

(30) Priority: 14.10.2022 CN 202211262875
(71) Applicant: Huawei Digital Power Technologies Co., Ltd., Shenzhen, Guangdong 518043 (CN)
(72) Inventor: SONG, Zhengang, Shenzhen, Guangdong 518043 (CN)
(74) Representative: Gill Jennings & Every LLP
(86) International application number: PCT/CN2023/121230
(87) International publication number: WO 2024/078318

(57) **Abstract**

This application provides a direct current conversion circuit and a photovoltaic inverter. The direct current conversion circuit includes an RC circuit, and a first direct current conversion unit and a second direct current conversion unit that are mutually connected in parallel. The RC circuit includes a resistor and a capacitor that are connected in series. Two ends of the RC circuit are respectively connected to one end of a first switching transistor in the first direct current conversion unit and one end of a second switching transistor in the second direct current conversion unit. When a state of the first switching transistor or the second switching transistor is switched, the other switching transistor remains in an on or off state. The RC circuit is configured to absorb a spike voltage when the state of the first switching transistor or the second switching transistor is switched, to reduce a voltage change rate of the first switching transistor or the second switching transistor. This reduces circuit costs of the direct current conversion circuit, and circuit design complexity is low.

## Description

This application claims priority to Chinese Patent Application No. 202211262875.X, filed with the China National Intellectual Property Administration on October 14, 2022 and entitled "DIRECT CURRENT CONVERSION CIRCUIT AND PHOTOVOLTAIC INVERTER", which is incorporated herein by reference in its entirety.

### TECHNICAL FIELD

This application relates to the field of electronic power, and in particular, to a direct current conversion circuit and a photovoltaic inverter.

### BACKGROUND

Switching power supply circuits are widely used in various power supply products, such as mobile phone adapters, uninterruptible power supplies, and photovoltaic inverters. Common switching power supply circuits include boost circuits, buck circuits, and the like. Usually, each power supply product may include a plurality of inputs, for example, the photovoltaic inverter may include a plurality of boost circuits. A plurality of switching power supply circuits in the various power supply products may be interleaved in parallel to reduce input current ripples or a size of a magnetic device. In addition, because a voltage spike and electromagnetic disturbance may occur on a switching transistor in the switching power supply circuit, an RC circuit is usually connected in parallel across two ends of the switching transistor in each switching power supply circuit. However, for a power supply product including a plurality of switching power supply circuits (for example, a plurality of boost circuits), a plurality of RC circuits need to be disposed for a plurality of switching transistors included in the power supply product. When there are a large quantity of switching power supply circuits, the RC circuits occupy a larger area of the power supply product, circuit costs are high, and a circuit design of the power supply product is complex. Therefore, how to reduce a quantity of RC circuit devices without affecting stress absorption of a switching transistor is one of technical problems that urgently need to be resolved currently.

### SUMMARY

Embodiments of this application provide a direct current conversion circuit and a photovoltaic inverter, to reduce circuit costs of the direct current conversion circuit, and circuit design complexity is low.

According to a first aspect, this application provides a direct current conversion circuit. The direct current conversion circuit includes an RC circuit, and a first direct current conversion unit and a second direct current conversion unit that are mutually connected in parallel. The first direct current conversion unit includes a first switching transistor and a first inductor that are connected in series. The second direct current conversion unit includes a second switching transistor and a second inductor that are connected in series. The RC circuit includes a resistor and a capacitor that are connected in series. Two ends of the RC circuit are respectively connected to one end of the first switching transistor in the first direct current conversion unit and one end of the second switching transistor in the second direct current conversion unit. When a state of one of the first switching transistor and the second switching transistor is switched, the other one of the first switching transistor and the second switching transistor remains in an on or off state. The RC circuit is configured to absorb a spike voltage when the state of the first switching transistor or the second switching transistor is switched, to reduce a voltage change rate of the first switching transistor or the second switching transistor.

In this application, the RC circuit located between the first switching transistor and the second switching transistor may absorb the spike voltage when the state of the first switching transistor or the second switching transistor is switched, to reduce a voltage change rate of each switching transistor, thereby avoiding occurrence of a voltage spike and electromagnetic disturbance on the switching transistor. In a direct current conversion apparatus, problems of voltage spikes and electromagnetic disturbance are resolved in a plurality of included switching transistors by using one RC circuit, thereby reducing a quantity of RC circuits and areas occupied by the RC circuit, and reducing circuit costs and circuit design complexity of the direct current conversion circuit in the direct current conversion apparatus.

With reference to the first aspect, in a first possible implementation, the direct current conversion circuit further includes an output capacitor. Each of the first direct current conversion unit and the second direct current conversion unit includes a switching transistor, an inductor, a capacitor, and a diode. A first connection terminal of the switching transistor is connected to a direct current power supply through the inductor, and is connected to the output capacitor through the diode. A first capacitor in the first direct current conversion unit and a second capacitor in the second direct current conversion unit are connected in parallel across two ends of the direct current power supply. A switching transistor of the first direct current conversion unit is the first switching transistor, and a switching transistor of the second direct current conversion unit is the second switching transistor. Second connection terminals of the first switching transistor and the second switching transistor are grounded. Herein, when a state of the first switching transistor or the second switching transistor is switched (from on to off, or from off to on), the other switching transistor remains on or off. In this way, the RC circuit located between the first switching transistor and the second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor.

With reference to the first aspect, in a second possible implementation, the direct current conversion circuit further includes an output capacitor. Each of the first direct current conversion unit and the second direct current conversion unit includes a switching transistor, an inductor, a capacitor, and a diode. A first connection terminal of the switching transistor is connected to a direct current power supply through the inductor, and is connected to the output capacitor through the diode. A first capacitor in the first direct current conversion unit and a second capacitor in the second direct current conversion unit are connected in series and then connected in parallel across two ends of the direct current power supply. A switching transistor of the first direct current conversion unit is the first switching transistor, and a switching transistor of the second direct current conversion unit is the second switching transistor. A second connection terminal of the first switching transistor is connected to a series connection terminal of the first capacitor and the second capacitor. A second connection terminal of the second switching transistor is grounded. Herein, when a state of the first switching transistor or the second switching transistor is switched (from on to off, or from off to on), the other switching transistor remains on or off. In this way, the RC circuit located between the first switching transistor and the second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor.

With reference to the first possible implementation or the second possible implementation of the first aspect, in a third possible implementation, the RC circuit is connected between a first connection terminal of the first switching transistor and a first connection terminal of the second switching transistor. The first switching transistor and the second switching transistor are MOS transistors, the first connection terminals of the first switching transistor and the second switching transistor are drains, and the second connection terminals of the first switching transistor and the second switching transistor are sources. Alternatively, the first switching transistor and the second switching transistor are IGBT transistors, the first connection terminals of the first switching transistor and the second switching transistor are collectors, and the second connection terminals of the first switching transistor and the second switching transistor are emitters. The RC circuit located between the first switching transistor and the second switching transistor may absorb a spike voltage when a state of the first switching transistor or the second switching transistor is switched, to reduce a voltage change rate of each switching transistor, thereby avoiding occurrence of a voltage spike and electromagnetic disturbance on the switching transistor.

With reference to the first aspect, in a fourth possible implementation, each of the first direct current conversion unit and the second direct current conversion unit includes an output capacitor, a switching transistor, an inductor, and a diode. One end of the inductor is connected to a first connection terminal of the switching transistor and a cathode of the diode. The other end of the inductor is connected to one end of the output capacitor. An anode of the diode and the other end of the output capacitor are connected and grounded. A switching transistor of the first direct current conversion unit is the first switching transistor, and a switching transistor of the second direct current conversion unit is the second switching transistor. Second connection terminals of the first switching transistor and the second switching transistor are respectively connected to a first direct current power supply and a second direct current power supply. Herein, when a state of the first switching transistor or the second switching transistor is switched (from on to off, or from off to on), the other switching transistor remains on or off. In this way, the RC circuit located between the first switching transistor and the second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor.

With reference to the first aspect, in a fifth possible implementation, each of the first direct current conversion unit and the second direct current conversion unit includes an output capacitor, a switching transistor, an inductor, and a diode. One end of the inductor is connected to a first connection terminal of the switching transistor and a cathode of the diode. The other end of the inductor is connected to one end of the output capacitor. An anode of the diode and the other end of the output capacitor are connected and grounded. A switching transistor of the first direct current conversion unit is the first switching transistor, and a switching transistor of the second direct current conversion unit is the second switching transistor. Second connection terminals of the first switching transistor and the second switching transistor are connected to a direct current power supply. Herein, when a state of the first switching transistor or the second switching transistor is switched (from on to off, or from off to on), the other switching transistor remains on or off. In this way, the RC circuit located between the first switching transistor and the second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor.

With reference to the fourth possible implementation or the fifth possible implementation of the first aspect, in a sixth possible implementation, the RC circuit is connected between a first connection terminal of the first switching transistor and a first connection terminal of the second switching transistor. The first switching transistor and the second switching transistor are MOS transistors, the first connection terminals of the first switching transistor and the second switching transistor are sources, and the second connection terminals of the first switching transistor and the second switching transistor are drains. Alternatively, the first switching transistor and the second switching transistor are IGBT transistors, the first connection terminals of the first switching transistor and the second switching transistor are emitters, and the second connection terminals of the first switching transistor and the second switching transistor are collectors. The RC circuit located between the first switching transistor and the second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor.

According to a second aspect, this application provides a photovoltaic inverter. The photovoltaic inverter includes an input port, a direct current conversion circuit, and an inverter circuit. One end of the direct current conversion circuit is connected to the input port, and the other end of the direct current conversion circuit is connected to a direct current end of the inverter circuit. The direct current conversion circuit includes an RC circuit, and a first direct current conversion unit and a second direct current conversion unit that are mutually connected in parallel. The first direct current conversion unit includes a first switching transistor and a first inductor that are connected in series. The second direct current conversion unit includes a second switching transistor and a second inductor that are connected in series. The RC circuit includes a resistor and a capacitor that are connected in series. Two ends of the RC circuit are respectively connected to one end of the first switching transistor in the first direct current conversion unit and one end of the second switching transistor in the second direct current conversion unit. When a state of one of the first switching transistor and the second switching transistor in the direct current conversion circuit is switched, the other one of the first switching transistor and the second switching transistor remains in an on or off state. Herein, the photovoltaic inverter is configured to absorb a spike voltage by using the RC circuit in the direct current conversion circuit when the state of the first switching transistor or the second switching transistor is switched, to reduce a voltage change rate of the first switching transistor or the second switching transistor.

With reference to the second aspect, in a first possible implementation, the direct current conversion circuit further includes an output capacitor. Each of the first direct current conversion unit and the second direct current conversion unit includes a switching transistor, an inductor, a capacitor, and a diode. A first connection terminal of the switching transistor is connected to a direct current power supply through the inductor, and is connected to the output capacitor through the diode. A first capacitor in the first direct current conversion unit and a second capacitor in the second direct current conversion unit are connected in parallel across two ends of the direct current power supply. A switching transistor of the first direct current conversion unit is the first switching transistor, and a switching transistor of the second direct current conversion unit is the second switching transistor. Second connection terminals of the first switching transistor and the second switching transistor are grounded. Herein, when a state of the first switching transistor or the second switching transistor is switched (from on to off, or from off to on), the other switching transistor remains on or off. In this way, the RC circuit located between the first switching transistor and the second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor.

With reference to the second aspect, in a second possible implementation, the direct current conversion circuit further includes an output capacitor. Each of the first direct current conversion unit and the second direct current conversion unit includes a switching transistor, an inductor, a capacitor, and a diode. A first connection terminal of the switching transistor is connected to a direct current power supply through the inductor, and is connected to the output capacitor through the diode. A first capacitor in the first direct current conversion unit and a second capacitor in the second direct current conversion unit are connected in series and then connected in parallel across two ends of the direct current power supply. A switching transistor of the first direct current conversion unit is the first switching transistor, and a switching transistor of the second direct current conversion unit is the second switching transistor. A second connection terminal of the first switching transistor is connected to a series connection terminal of the first capacitor and the second capacitor. A second connection terminal of the second switching transistor is grounded. Herein, when a state of the first switching transistor or the second switching transistor is switched (from on to off, or from off to on), the other switching transistor remains on or off. In this way, the RC circuit located between the first switching transistor and the second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor.

With reference to the second aspect, in a third possible implementation, each of the first direct current conversion unit and the second direct current conversion unit includes an output capacitor, a switching transistor, an inductor, and a diode. One end of the inductor is connected to a first connection terminal of the switching transistor and a cathode of the diode. The other end of the inductor is connected to one end of the output capacitor. An anode of the diode and the other end of the output capacitor are connected and grounded. A switching transistor of the first direct current conversion unit is the first switching transistor, and a switching transistor of the second direct current conversion unit is the second switching transistor. Second connection terminals of the first switching transistor and the second switching transistor are respectively connected to a first direct current power supply and a second direct current power supply. Herein, when a state of the first switching transistor or the second switching transistor is switched (from on to off, or from off to on), the other switching transistor remains on or off. In this way, the RC circuit located between the first switching transistor and the second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor.

With reference to the second aspect, in a fourth possible implementation, each of the first direct current conversion unit and the second direct current conversion unit includes an output capacitor, a switching transistor, an inductor, and a diode. One end of the inductor is connected to a first connection terminal of the switching transistor and a cathode of the diode. The other end of the inductor is connected to one end of the output capacitor. An anode of the diode and the other end of the output capacitor are connected and grounded. A switching transistor of the first direct current conversion unit is the first switching transistor, and a switching transistor of the second direct current conversion unit is the second switching transistor. Second connection terminals of the first switching transistor and the second switching transistor are connected to a direct current power supply. Herein, when a state of the first switching transistor or the second switching transistor is switched (from on to off, or from off to on), the other switching transistor remains on or off. In this way, the RC circuit located between the first switching transistor and the second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor.

According to a third aspect, this application provides a direct current conversion apparatus. The direct current conversion apparatus includes the direct current conversion circuit provided in any one of the first aspect and the possible implementations of the first aspect, and a controller. The controller is configured to control, based on drive control signals of the first switching transistor and the second switching transistor, the first switching transistor and the second switching transistor to be turned on or off, and phases of the drive control signals of the first switching transistor and the second switching transistor are different. The direct current conversion apparatus absorbs spike voltages around the first switching transistor and the second switching transistor by using one RC circuit, to protect each switching transistor, thereby reducing a quantity of RC circuits and areas occupied by the RC circuit, and reducing circuit costs of the direct current conversion circuit in the direct current conversion apparatus, and circuit design complexity is low.

With reference to the third aspect, in a first possible implementation, a time constant of the RC circuit is less than a signal cycle of a drive control signal of each of the first switching transistor and the second switching transistor. The direct current conversion apparatus sends a drive control signal to each of the first switching transistor and the second switching transistor by using the controller, so that when a state of the first switching transistor or the second switching transistor is switched (from on to off, or from off to on), the other switching transistor remains on or off.

According to a fourth aspect, this application provides a grid power supply system. The grid power supply system includes a direct current power supply, the direct current conversion apparatus provided in any one of the third aspect and the possible implementations of the third aspect, and an inverter unit. The direct current power supply is configured to provide a direct current input for the direct current conversion apparatus. The inverter unit is configured to perform voltage inverter conversion based on a direct current output by the direct current conversion apparatus, and output an alternating current to an alternating current power grid. The direct current power supply includes at least one of a solar panel or an energy storage battery.

In this application, an RC circuit located between a first switching transistor and a second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor. In the direct current conversion apparatus, problems of voltage spikes and electromagnetic disturbance are resolved in a plurality of included switching transistors by using one RC circuit, thereby reducing a quantity of RC circuits and areas occupied by the RC circuit, and reducing circuit costs and circuit design complexity of a direct current conversion circuit in the direct current conversion apparatus.

### BRIEF DESCRIPTION OF DRAWINGS

FIG. 1 is a diagram of an application scenario of a grid power supply system according to this application;
FIG. 2 is a diagram of another application scenario of a grid power supply system according to this application;
FIG. 3 is a diagram of a structure of a grid power supply system according to this application;
FIG. 4 is a diagram of another structure of a grid power supply system according to this application;
FIG. 5 is a diagram of a structure of a direct current conversion unit according to this application;
FIG. 6 is a diagram of a structure of a direct current conversion circuit according to this application;
FIG. 7 is a diagram of a drive control signal according to this application;
FIG. 8a is a diagram of a current path of a direct current conversion circuit according to this application;
FIG. 8b is a diagram of another current path of a direct current conversion circuit according to this application;
FIG. 8c is a diagram of another current path of a direct current conversion circuit according to this application;
FIG. 9a is a diagram of another current path of a direct current conversion circuit according to this application;
FIG. 9b is a diagram of another current path of a direct current conversion circuit according to this application;
FIG. 9c is a diagram of another current path of a direct current conversion circuit according to this application;
FIG. 10 is a diagram of another structure of a direct current conversion circuit according to this application;
FIG. 11 is a diagram of another structure of a direct current conversion unit according to this application;
FIG. 12 is a diagram of another structure of a direct current conversion circuit according to this application; and
FIG. 13 is a diagram of another structure of a direct current conversion circuit according to this application.

### DESCRIPTION OF EMBODIMENTS

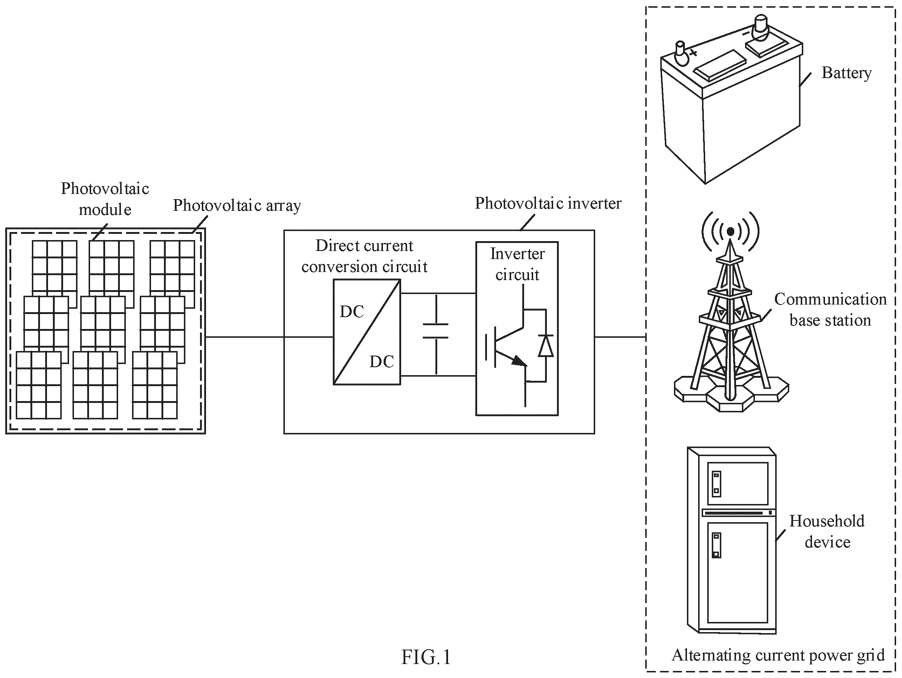

FIG. 1 is a diagram of an application scenario of a grid power supply system according to this application. The grid power supply system provided in this application may include a direct current power supply and a photovoltaic inverter. The direct current power supply may include a photovoltaic array. An output end of the photovoltaic array may be connected to an input port of the photovoltaic inverter, and an output end of the photovoltaic inverter is connected to an alternating current power grid. In the grid power supply system shown in FIG. 1, the photovoltaic array may include one or more photovoltaic strings that are connected in parallel, and one photovoltaic string may be obtained by connecting one or more photovoltaic modules in series. The photovoltaic inverter may change (which may be boosting, bucking, or the like), by using a direct current conversion circuit, a direct current provided by the photovoltaic array, and then perform voltage inverter conversion on a transformed direct current power by using an inverter circuit to supply power to a power-consuming device like a battery, a communication base station, or a household device in the alternating current power grid.

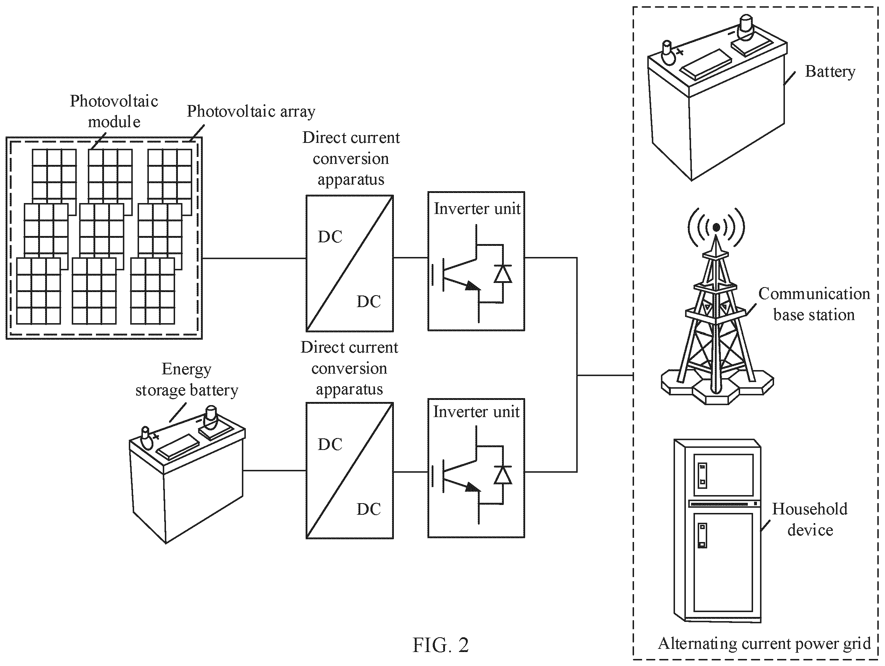

FIG. 2 is a diagram of another application scenario of a grid power supply system according to this application. The grid power supply system provided in this application may include a direct current power supply, a direct current conversion apparatus, and an inverter unit. The direct current power supply may include a photovoltaic array, an output end of the photovoltaic array may be connected to a first end of the direct current conversion apparatus, and a second end of the direct current conversion apparatus is connected to an alternating current power grid through the inverter unit. In the grid power supply system shown in FIG. 2, the photovoltaic array may include one or more photovoltaic strings that are connected in parallel, and one photovoltaic string may be obtained by connecting one or more photovoltaic modules in series. The direct current conversion apparatus may change (which may be boosting, bucking, or the like) a direct current provided by the photovoltaic array, and output a transformed direct current to the inverter unit. After performing voltage inverter conversion on the transformed direct current, the inverter unit supplies power to a power-consuming device like a battery, a communication base station, or a household device in the alternating current power grid.

In some feasible implementations, refer to FIG. 2 again. The direct current power supply may further include an energy storage battery. An output end of the energy storage battery may be connected to the first end of the direct current conversion apparatus, and the second end of the direct current conversion apparatus is connected to the alternating current power grid through the inverter unit. The direct current conversion apparatus may change (which may be boosting, bucking, or the like) a direct current provided by the energy storage battery, and output a transformed direct current to the inverter unit. After performing voltage inverter conversion on the transformed direct current, the inverter unit supplies power to a power-consuming device like a battery, a communication base station, or a household device in the alternating current power grid.

In the application scenario shown in FIG. 1 or FIG. 2, the photovoltaic inverter or the direct current conversion apparatus may include a plurality of direct current conversion circuits (which may be boost circuits, buck circuits, or the like), and the direct current conversion circuits may be interleaved in parallel to reduce input current ripples or a size of a magnetic device. In a working process of the direct current conversion circuits, a voltage spike and electromagnetic disturbance may occur on a switching transistor in each direct current conversion circuit. As a result, the switching transistor may be damaged under a large voltage stress and current impulse. Generally, an RC circuit (or an RC absorption circuit) is connected in parallel across two ends of a switching transistor in each switching power supply circuit to avoid damage to the switching transistor. However, when there are a large quantity of direct current conversion circuits, a plurality of RC circuits need to be disposed for a plurality of switching transistors included in the photovoltaic inverter or the direct current conversion apparatus. An excessive quantity of RC circuits occupies a large area of the photovoltaic inverter or the direct current conversion apparatus, so that circuit costs are high, and circuit designs of the photovoltaic inverter and the direct current conversion apparatus are complex.

In a grid power supply system provided in this application, a direct current conversion circuit may include a first direct current conversion unit and a second direct current conversion unit (each direct current conversion unit may be a boost circuit, a buck circuit, or the like). The first direct current conversion unit and the second direct current conversion unit are mutually connected in parallel (which may be interleaved in parallel). One end of a first switching transistor in the first direct current conversion unit is connected to one end of a second switching transistor in the second direct current conversion unit by using one RC circuit. Another end of the first switching transistor and the another end of the second switching transistor are connected to a stable potential. Herein, when a state of the first switching transistor is switched (from on to off, or from off to on), the second switching transistor remains on or off; or when a state of the second switching transistor is switched (from on to off, or from off to on), the first switching transistor remains on or off. The RC circuit located between the first switching transistor and the second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor. In the photovoltaic inverter or the direct current conversion apparatus, problems of voltage spikes and electromagnetic disturbance are resolved in a plurality of included switching transistors by using one RC circuit, thereby reducing a quantity of RC circuits and areas occupied by the RC circuit, and reducing circuit costs and circuit design complexity of the direct current conversion circuit in the photovoltaic inverter or the direct current conversion apparatus.

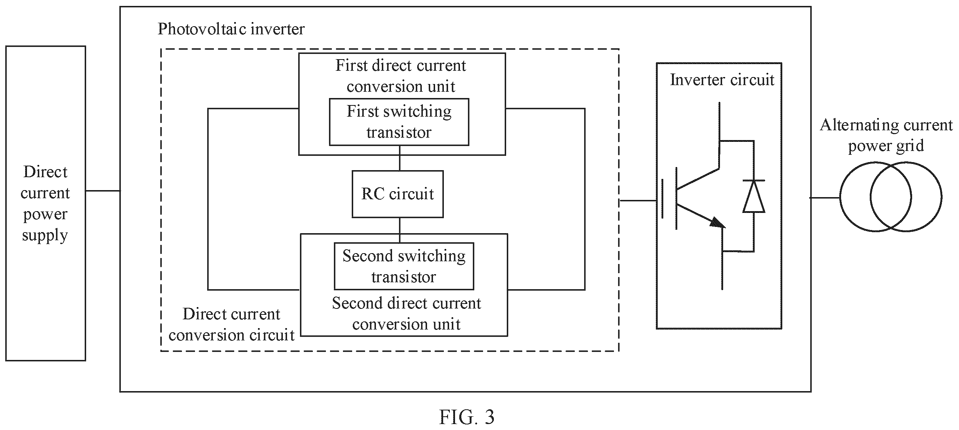

FIG. 3 is a diagram of a structure of a grid power supply system according to this application. The grid power supply system shown in FIG. 3 includes a direct current power supply and a photovoltaic inverter. The direct current power supply may be a solar panel, an input port of the photovoltaic inverter is coupled to the direct current power supply in the grid power supply system, and an output end of the photovoltaic inverter is connected to an alternating current power grid. In the grid power supply system shown in FIG. 2, the direct current power supply is configured to provide an energy input or a power input for the photovoltaic inverter. The photovoltaic inverter may change (which may be boosting, bucking, or the like), by using a direct current conversion circuit, a direct current provided by a photovoltaic array, and then perform voltage inverter conversion on a transformed direct current power by using an inverter circuit to supply power to a power-consuming device like a battery, a communication base station, or a household device in the alternating current power grid.

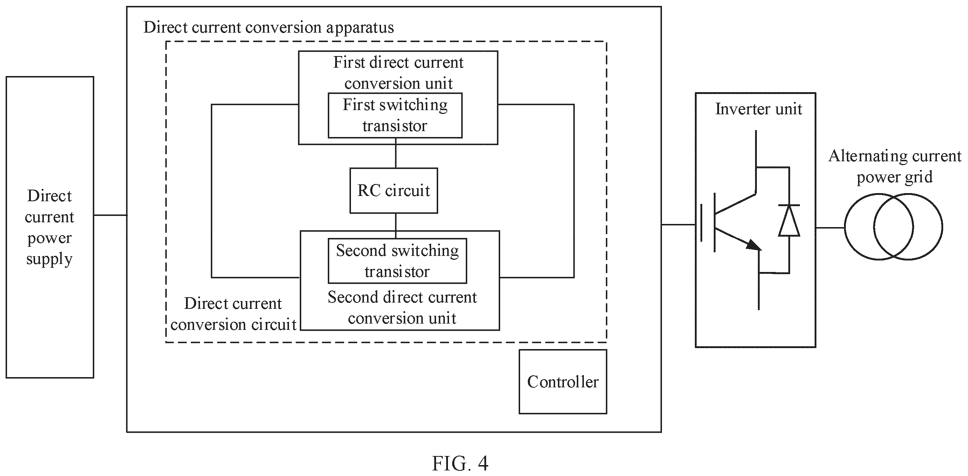

FIG. 4 is a diagram of another structure of a grid power supply system according to this application. The grid power supply system shown in FIG. 4 includes a direct current power supply, a direct current conversion apparatus, and an inverter unit. The direct current power supply may be a solar panel, an energy storage battery, or the like. An input end of the direct current conversion apparatus is coupled to the direct current power supply in the grid power supply system, and an output end of the direct current conversion apparatus is connected to an alternating current power grid through the inverter unit. In the grid power supply system shown in FIG. 4, the direct current power supply is configured to provide an energy input or a power input for the direct current conversion apparatus. The direct current conversion apparatus may change (which may be boosting, bucking, or the like) a direct current provided by the direct current power supply, and output a transformed direct current to the inverter unit. The inverter unit performs voltage inverter conversion on the transformed direct current, and outputs an alternating current obtained through the inverter conversion to the alternating current power grid, to supply power to the alternating current power grid.

In some feasible implementations, in the grid power supply system shown in FIG. 3 or FIG. 4, the direct current conversion circuit in the photovoltaic inverter or the direct current conversion apparatus may include two direct current conversion units (which may be a first direct current conversion unit and a second direct current conversion unit). The first direct current conversion unit and the second direct current conversion unit are interleaved in parallel. One end of a first switching transistor in the first direct current conversion unit is connected to one end of a second switching transistor in the second direct current conversion unit by using one RC circuit. The grid power supply system shown in FIG. 4 is used as an example. The direct current conversion apparatus may further include a controller. The direct current conversion apparatus may control, by using the controller, the first switching transistor and the second switching transistor to be turned on or off based on drive control signals of the first switching transistor and the second switching transistor. Herein, phases of the drive control signals of the first switching transistor and the second switching transistor are different. In other words, the controller may control each switching transistor based on the drive control signals of the first switching transistor and the second switching transistor, so that when a state of the first switching transistor or the second switching transistor is switched, the other switching transistor remains on or off. In this way, the RC circuit located between the first switching transistor and the second switching transistor can absorb a spike voltage when the state of the first switching transistor or the second switching transistor is switched, to reduce a voltage change rate of each switching transistor, thereby avoiding occurrence of a voltage spike and electromagnetic disturbance on the switching transistor. This reduces a quantity of RC circuits, areas occupied by the RC circuit, and circuit costs of the direct current conversion circuit in the direct current conversion apparatus, and circuit design complexity is low.

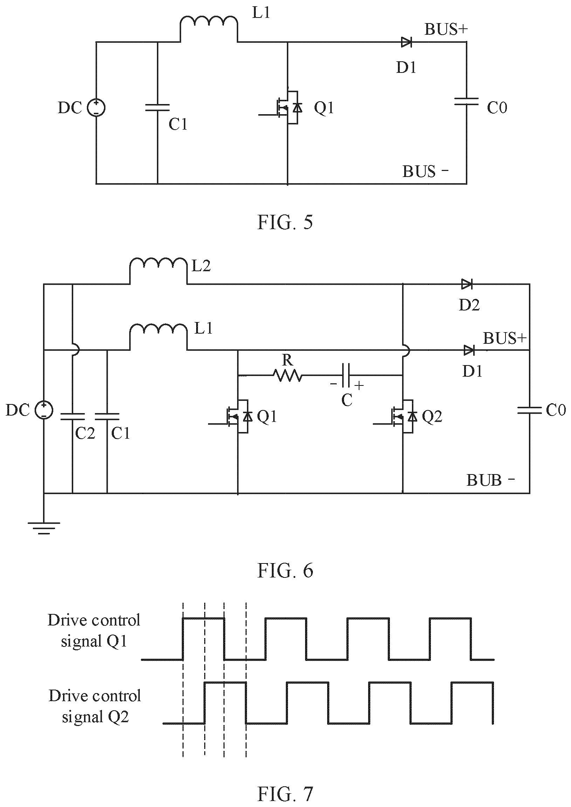

The following describes, with reference to FIG. 5 to FIG. 13, the direct current conversion circuit provided in embodiments of this application by using examples. In some feasible implementations, the direct current conversion circuit may further include an output capacitor, and each direct current conversion unit in the direct current conversion circuit may include a switching transistor, an inductor, a capacitor, and a diode. FIG. 5 is a diagram of a structure of a direct current conversion unit according to this application. As shown in FIG. 5, FIG. 5 may be a diagram of a structure of the first direct current conversion unit or the second direct current conversion unit (for ease of description, the first direct current conversion unit is used as an example for description). A first connection terminal of a first switching transistor (which may be represented as a switching transistor Q1 for ease of description) in the first direct current conversion unit is connected to a direct current power supply through a first inductor (which may be represented as an inductor L1 for ease of description). The switching transistor Q1 may be further connected to an output capacitor C0 through a first diode (which may be represented as a diode D1 for ease of description). The first capacitor (which may be represented as a capacitor C1 for ease of description) is connected in parallel across two ends of the direct current power supply. It may be understood that a circuit structure of the second direct current conversion unit is the same as that of the first direct current conversion unit, and details are not described herein. The direct current conversion unit provided in FIG. 5 may constitute a direct current conversion circuit. FIG. 6 is a diagram of a structure of a direct current conversion circuit according to this application. As shown in FIG. 6, FIG. 6 may include a first direct current conversion unit and a second direct current conversion unit. The first direct current conversion unit may include a switching transistor Q1, an inductor L1, a diode D1, and a capacitor C1. The second direct current conversion unit may include a switching transistor Q2, an inductor L2, a diode D2, and a capacitor C2. For a device connection relationship in each direct current conversion unit, refer to the direct current conversion unit provided in FIG. 5. Details are not described herein. FIG. 6 further includes an RC circuit. The RC circuit includes a capacitor C and a resistor R that are connected in series. A first connection terminal of the switching transistor Q1 in the first direct current conversion unit is connected to a first connection terminal of the switching transistor Q2 in the second direct current conversion unit by using the RC circuit. The capacitor C1 and the capacitor C2 are connected in parallel across two ends of the direct current power supply. Second connection terminals of the switching transistor Q1 and the switching transistor Q2 are grounded.

In some feasible implementations, the direct current conversion apparatus may include the direct current conversion circuit shown in FIG. 6 and a controller. The direct current conversion apparatus may control, by using the controller, the switching transistor Q1 and the switching transistor Q2 based on drive control signals of the first switching transistor (namely, the switching transistor Q1) and the second switching transistor (namely, the switching transistor Q2), so that when a state of the switching transistor Q1 or the switching transistor Q2 is switched, the other switching transistor remains on or off. Herein, phases of the drive control signals of the switching transistor Q1 and the switching transistor Q2 are different. FIG. 7 is a diagram of a drive control signal according to this application. FIG. 7 includes a drive control signal Q1 corresponding to the switching transistor Q1 and a drive control signal Q2 corresponding to the switching transistor Q2. The phases of the drive control signals of the switching transistor Q1 and the switching transistor Q2 may differ by a preset degree (for example, 90 degrees or 180 degrees). A phase of the drive control signal Q1 may lead a phase of the drive control signal Q2 by 90 degrees, or a phase of the drive control signal Q1 may lag behind a phase of the drive control signal Q2 by 90 degrees. For example, the phase of the drive control signal Q1 leads the phase of the drive control signal Q2 by 90 degrees. When the drive control signal Q1 in FIG. 7 changes from a high level to a low level (which may correspond to that the switching transistor Q1 is switched from on to off, or from off to on), the drive control signal Q2 remains unchanged at the low level (which may correspond to that the switching transistor Q2 remains on or off), or when the drive control signal Q1 changes from a low level to a high level, the drive control signal Q2 remains unchanged at the high level. Similarly, when the drive control signal Q2 changes (from the high level to the low level, or from the low level to the high level), the drive control signal Q1 remains unchanged (remaining at the high level or the low level). The controller controls the switching transistor Q1 and the switching transistor Q2 based on the drive control signal Q1 and the drive control signal Q2, so that when a state of the switching transistor Q1 or the switching transistor Q2 is switched (from on to off, or from off to on), the other switching transistor remains on or off. In this way, the RC circuit located between the first switching transistor and the second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor.

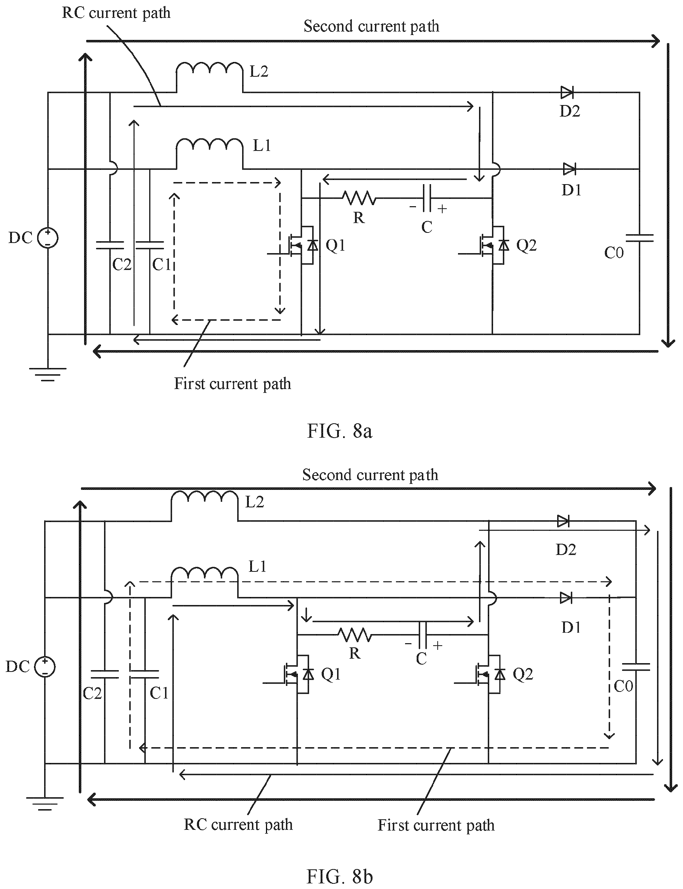

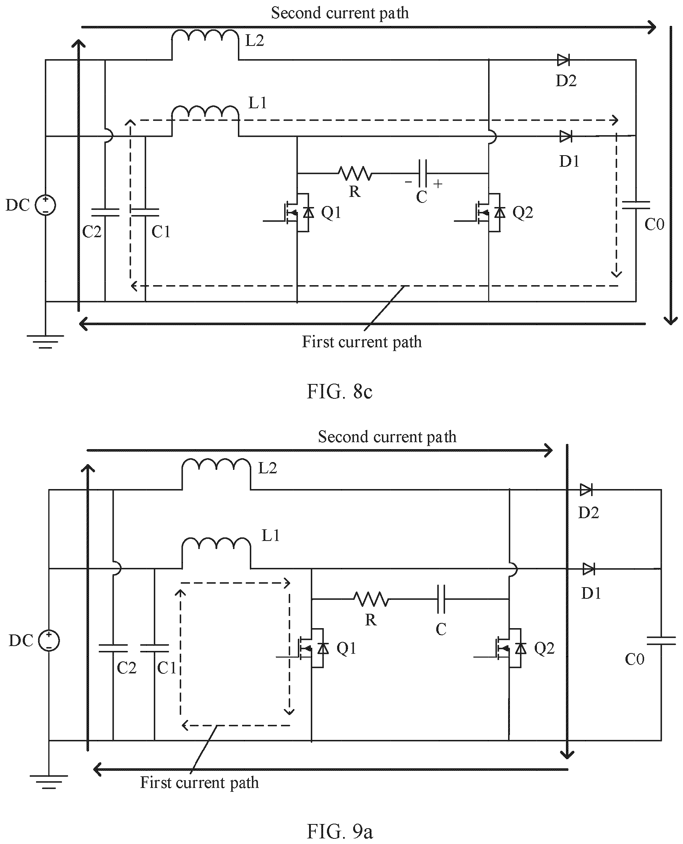

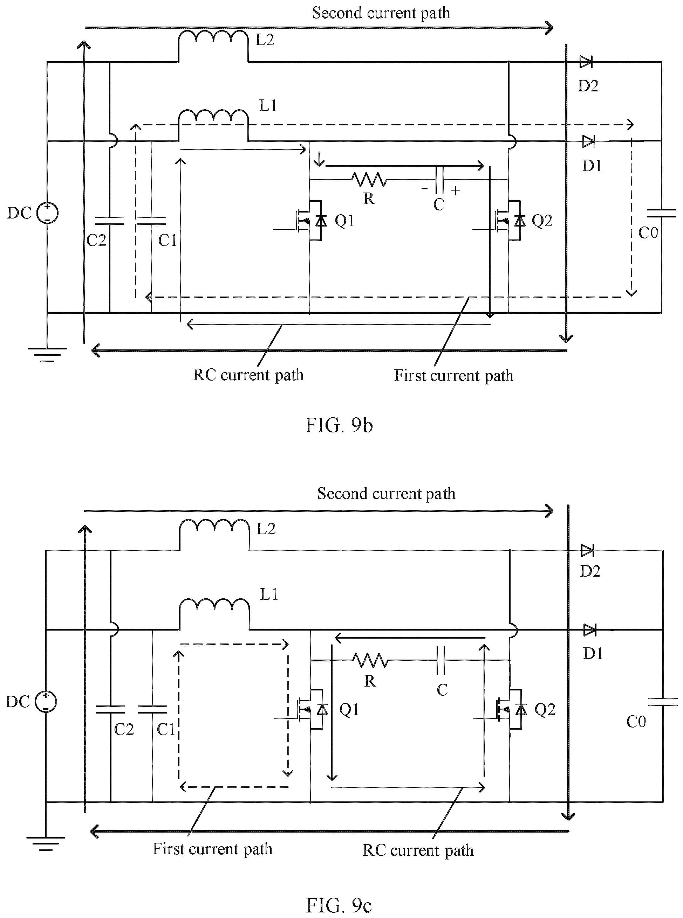

For example, the direct current conversion circuit shown in FIG. 6 is used as an example. The controller may control the switching transistor Q2 to be off when controlling the switching transistor Q1 to switch from on to off. FIG. 8a is a diagram of a current path of a direct current conversion circuit according to this application. When the switching transistor Q2 remains off and the switching transistor Q1 is turned on, a current path (which may be referred to as a first current path for ease of description) corresponding to the first direct current conversion unit in FIG. 8a may flow through the capacitor C1, the inductor L1, and the switching transistor Q1 in sequence, and a current path (which may be referred to as a second current path for ease of description) corresponding to the second direct current conversion unit in FIG. 8a may flow to the output capacitor C0 through the capacitor C2, the inductor L2, and the diode D2 in sequence. This means a freewheeling state. A current path (which may be referred to as an RC current path for ease of description) corresponding to the RC circuit in FIG. 8a may flow through the capacitor C2, the inductor L2, the capacitor C, the resistor R, and the switching transistor Q1 in sequence. In this case, the capacitor C is charged, one end that is of the capacitor C and that is connected to the resistor is a negative electrode, and the other end of the capacitor C is a positive electrode. FIG. 8b is a diagram of another current path of a direct current conversion circuit according to this application. When the switching transistor Q2 remains off, and the switching transistor Q1 is switched from on to off, a first current path in FIG. 8b may flow to the output capacitor C0 through the capacitor C1, the inductor L1, and the diode D1 in sequence, and a second current path may flow to the output capacitor C0 through the capacitor C2, the inductor L2, and the diode D2 in sequence. This means a freewheeling state. An RC current path in FIG. 8b may flow to the output capacitor C0 through the capacitor C1, the inductor L1, the resistor R, the capacitor C, and the diode D2 in sequence. In this case, a voltage at one end that is of the RC circuit and that is connected to the switching transistor Q1 is clamped to an output capacitor, and the capacitor C discharges. Herein, a time constant of the RC circuit may be less than a cycle of the drive control signal of the switching transistor. After the capacitor C completes discharging, a current of the RC circuit is zero. FIG. 8c is a diagram of another current path of a direct current conversion circuit according to this application. When the switching transistor Q2 and the switching transistor Q1 remain off, a first current path in FIG. 8c may flow to the output capacitor C0 through the capacitor C1, the inductor L1, and the diode D1 in sequence, and a second current path may flow to the output capacitor C0 through the capacitor C2, the inductor L2, and the diode D2 in sequence. The controller controls the switching transistor Q1 and the switching transistor Q2 based on the drive control signal Q1 and the drive control signal Q2, so that the switching transistor Q2 remains off when the switching transistor Q1 is switched from on to off. The RC circuit located between the switching transistor Q1 and the switching transistor Q2 may suppress a voltage surge when the switching transistor Q1 is turned off, and absorb a spike voltage around the switching transistor Q1 to protect the switching transistor Q1. The foregoing controller may further control the switching transistor Q2 to be on when controlling the switching transistor Q1 to switch from on to off. FIG. 9a is a diagram of another current path of a direct current conversion circuit according to this application. When the switching transistor Q2 and the switching transistor Q1 remain on, a first current path in FIG. 9a may flow through the capacitor C1, the inductor L1, and the switching transistor Q1 in sequence, a second current path may flow through the capacitor C2, the inductor L2, and the switching transistor Q2 in sequence, and voltages at two ends of the RC circuit are zero. FIG. 9b is a diagram of another current path of a direct current conversion circuit according to this application. When the switching transistor Q2 remains on, and the switching transistor Q1 is switched from on to off, a first current path in FIG. 9b may flow to the output capacitor C0 through the capacitor C1, the inductor L1, and the diode D1 in sequence, and a second current path may flow through the capacitor C2, the inductor L2, and the switching transistor Q2 in sequence. An RC current path in FIG. 9b may flow to the output capacitor C0 through the capacitor C1, the inductor L1, the resistor R, the capacitor C, and the switching transistor Q2 in sequence. In this case, a voltage at one end that is of the RC circuit and that is connected to the switching transistor Q1 is clamped to an output capacitor, and the capacitor C is charged. After the capacitor C enters a steady state, one end that is of the capacitor C and that is connected to the resistor is a positive voltage, and the other end of the capacitor C is a negative voltage. FIG. 9c is a diagram of another current path of a direct current conversion circuit according to this application. When the switching transistor Q2 remains on and the switching transistor Q1 remains off, a first current path in FIG. 9c may flow through the capacitor C1, the inductor L1, and the switching transistor Q1 in sequence, and a second current path may flow through the capacitor C2, the inductor L2, and the switching transistor Q2 in sequence. An RC current path in FIG. 9c may flow through the switching transistor Q2, the capacitor C, the resistor R, and the switching transistor Q1 in sequence, and the capacitor C discharges. After the discharging ends, voltages at two ends of the RC circuit are zero, waiting for a next action of the switching transistor. The controller controls the switching transistor Q1 and the switching transistor Q2 based on the drive control signal Q1 and the drive control signal Q2, so that the switching transistor Q2 remains on when the switching transistor Q1 is switched from on to off. The RC circuit located between the switching transistor Q1 and the switching transistor Q2 may suppress a voltage surge when the switching transistor Q1 is turned off, and absorb a spike voltage around the switching transistor Q1 to protect the switching transistor Q1. It may be understood that, in the direct current conversion circuit shown in FIG. 6, when the controller controls the switching transistor Q2 to switch from on to off, a current path on which the controller controls the switching transistor Q1 to be off or on is similar to the current paths shown in FIG. 8a to FIG. 9c, and details are not described herein. The direct current conversion apparatus absorbs a spike voltage around the first switching transistor Q1 or the second switching transistor Q2 by using one RC circuit, to protect each switching transistor, thereby reducing a quantity of RC circuits and areas occupied by the RC circuit, and reducing circuit costs of the direct current conversion circuit in the direct current conversion apparatus, and circuit design complexity is low.

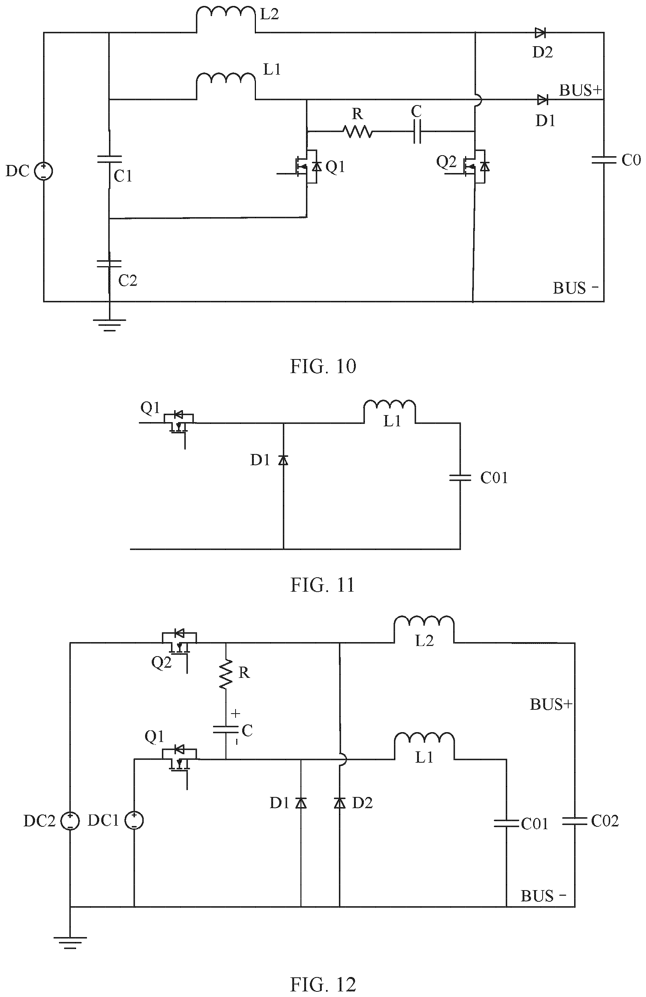

In some feasible implementations, FIG. 10 is a diagram of another structure of a direct current conversion circuit according to this application. As shown in FIG. 10, FIG. 10 may include a first direct current conversion unit and a second direct current conversion unit. The first direct current conversion unit may include a switching transistor Q1, an inductor L1, a diode D1, and a capacitor C1. The second direct current conversion unit may include a switching transistor Q2, an inductor L2, a diode D2, and a capacitor C2. For a device connection relationship in each direct current conversion unit, refer to the direct current conversion unit provided in FIG. 7. Details are not described herein. FIG. 10 further includes an RC circuit. The RC circuit includes a capacitor C and a resistor R that are connected in series. A first connection terminal of the switching transistor Q1 in the first direct current conversion unit is connected to a first connection terminal of the switching transistor Q2 in the second direct current conversion unit by using the RC circuit. The capacitor C1 and the capacitor C2 are connected in series and then connected in parallel across two ends of a direct current power supply. A second connection terminal of the switching transistor Q1 is connected to a series connection terminal of the capacitor C1 and the capacitor C2, and a second connection terminal of the switching transistor Q2 is grounded. The direct current conversion apparatus may alternatively include the direct current conversion circuit shown in FIG. 10 and a controller. The direct current conversion apparatus may control, by using the controller, the switching transistor Q1 and the switching transistor Q2 based on drive control signals of the switching transistor Q1 and the switching transistor Q2. Herein, the drive control signals of the switching transistor Q1 and the switching transistor Q2 may differ by a preset degree (for example, 90 degrees, with reference to the drive control signal shown in FIG. 7). The controller may control the switching transistor Q1 and the switching transistor Q2 based on the drive control signal Q1 and the drive control signal Q2, so that when a state of the switching transistor Q1 or the switching transistor Q2 is switched (from on to off, or from off to on), the other switching transistor remains on or off. Herein, when the controller controls each switching transistor, a current path in the direct current conversion circuit is similar to the current paths shown in FIG. 8a to FIG. 9c, and details are not described herein. The RC circuit located between the first switching transistor and the second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor. The direct current conversion apparatus absorbs a spike voltage around the first switching transistor Q1 or the second switching transistor Q2 by using one RC circuit, to protect each switching transistor, thereby reducing a quantity of RC circuits and areas occupied by the RC circuit, and reducing circuit costs of the direct current conversion circuit in the direct current conversion apparatus, and circuit design complexity is low.

In some feasible implementations, in the direct current conversion circuit shown in FIG. 6 or FIG. 10, the switching transistor Q1 and the switching transistor Q2 may be metal-oxide-semiconductor field-effect transistors (Metal-Oxide-Semiconductor Field-Effect Transistors, MOSFETs), referred to as MOS transistors for short. The first connection terminals of the switching transistor Q1 and the switching transistor Q2 may be drains, and the second connection terminals of the switching transistor Q1 and the switching transistor Q2 may be sources. Alternatively, the switching transistor Q1 and the switching transistor Q2 may be insulated gate bipolar transistors (insulated gate bipolar transistors, IGBTs). The first connection terminals of the switching transistor Q1 and the switching transistor Q2 may be collectors, and the second connection terminals of the switching transistor Q1 and the switching transistor Q2 may be emitters. In other words, a first connection terminal and a second connection terminal of each switching transistor may be determined based on a specific device type. This is not limited herein.

In some feasible implementations, FIG. 11 is a diagram of another structure of a direct current conversion unit according to this application. As shown in FIG. 11, FIG. 11 may be a diagram of a structure of the first direct current conversion unit or the second direct current conversion unit (the first direct current conversion unit is used as an example for ease of description). A first inductor (which may be represented as an inductor L1 for ease of description) and a first output capacitor (which may be represented as an output capacitor C01 for ease of description) in the first direct current conversion unit are connected in series and then connected in parallel across two ends of a first diode (which may be represented as a diode D1 for ease of description). A first end of a first switching transistor (which may be represented as a switching transistor Q1 for ease of description) in the first direct current conversion unit is connected to the diode D1 and the inductor L1. It may be understood that a circuit structure of the second direct current conversion unit is the same as that of the first direct current conversion unit, and details are not described herein. The direct current conversion unit provided in FIG. 11 may constitute a direct current conversion circuit. FIG. 12 is a diagram of another structure of a direct current conversion circuit according to this application. As shown in FIG. 12, FIG. 12 may include a first direct current conversion unit and a second direct current conversion unit. The first direct current conversion unit may include a switching transistor Q1, an inductor L1, a diode D1, and an output capacitor C01. The second direct current conversion unit may include a switching transistor Q2, an inductor L2, a diode D2, and an output capacitor C02. For a device connection relationship in each direct current conversion unit, refer to the direct current conversion unit provided in FIG. 11. Details are not described herein. FIG. 12 further includes an RC circuit. The RC circuit includes a capacitor C and a resistor R that are connected in series. A first connection terminal of the switching transistor Q1 in the first direct current conversion unit is connected to a first connection terminal of the switching transistor Q2 in the second direct current conversion unit by using the RC circuit. Second connection terminals of the switching transistor Q1 and the switching transistor Q2 are respectively connected to a first direct current power supply (namely, a direct current power supply DC1) and a second direct current power supply (namely, a direct current power supply DC2). It may be understood that the direct current conversion apparatus may alternatively include the direct current conversion circuit shown in FIG. 11 and a controller. The direct current conversion apparatus may control, by using the controller, the switching transistor Q1 and the switching transistor Q2 based on drive control signals of the switching transistor Q1 and the switching transistor Q2. Herein, the drive control signals of the switching transistor Q1 and the switching transistor Q2 may differ by a preset degree (for example, 90 degrees, with reference to the drive control signal shown in FIG. 7). The controller may control the switching transistor Q1 and the switching transistor Q2 based on the drive control signal Q1 and the drive control signal Q2, so that when a state of the switching transistor Q1 or the switching transistor Q2 is switched (from on to off, or from off to on), the other switching transistor remains on or off. Herein, when the controller controls each switching transistor, a current path in the direct current conversion circuit is similar to the current paths shown in FIG. 8a to FIG. 9c, and details are not described herein. The RC circuit located between the first switching transistor and the second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor. The direct current conversion apparatus absorbs a spike voltage around the first switching transistor Q1 or the second switching transistor Q2 by using one RC circuit, to protect each switching transistor, thereby reducing a quantity of RC circuits and areas occupied by the RC circuit, and reducing circuit costs of the direct current conversion circuit in the direct current conversion apparatus, and circuit design complexity is low.

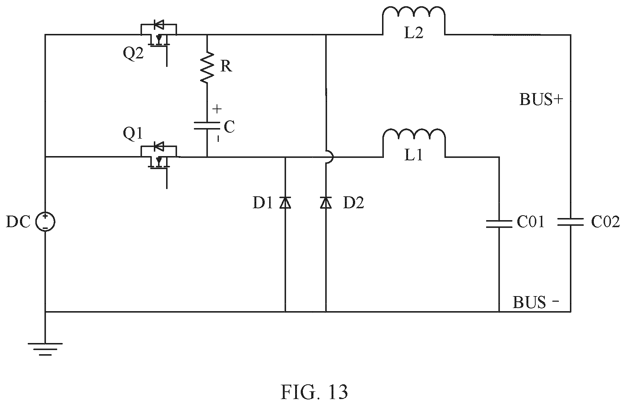

In some feasible implementations, FIG. 13 is a diagram of another structure of a direct current conversion circuit according to this application. As shown in FIG. 13, FIG. 13 may include a first direct current conversion unit and a second direct current conversion unit. The first direct current conversion unit may include a switching transistor Q1, an inductor L1, a diode D1, and an output capacitor C01. The second direct current conversion unit may include a switching transistor Q2, an inductor L2, a diode D2, and an output capacitor C02. For a device connection relationship in each direct current conversion unit, refer to the direct current conversion unit provided in FIG. 11. Details are not described herein. FIG. 13 further includes an RC circuit. The RC circuit includes a capacitor C and a resistor R that are connected in series. A first connection terminal of the switching transistor Q1 in the first direct current conversion unit is connected to a first connection terminal of the switching transistor Q2 in the second direct current conversion unit by using the RC circuit. Second connection terminals of the switching transistor Q1 and the switching transistor Q2 are connected to a direct current power supply. It may be understood that the direct current conversion apparatus may alternatively include the direct current conversion circuit shown in FIG. 11 and a controller. The direct current conversion apparatus may control, by using the controller, the switching transistor Q1 and the switching transistor Q2 based on drive control signals of the switching transistor Q1 and the switching transistor Q2. Herein, the drive control signals of the switching transistor Q1 and the switching transistor Q2 may differ by a preset degree (for example, 90 degrees, with reference to the drive control signal shown in FIG. 7). The controller may control the switching transistor Q1 and the switching transistor Q2 based on the drive control signal Q1 and the drive control signal Q2, so that when a state of the switching transistor Q1 or the switching transistor Q2 is switched (from on to off, or from off to on), the other switching transistor remains on or off. Herein, when the controller controls each switching transistor, a current path in the direct current conversion circuit is similar to the current paths shown in FIG. 8a to FIG. 9c, and details are not described herein. The RC circuit located between the first switching transistor and the second switching transistor may absorb a spike voltage when the state of the first switching transistor or the second switching transistor is switched, to reduce a voltage change rate of each switching transistor, thereby avoiding occurrence of a voltage spike and electromagnetic disturbance on the switching transistor. The direct current conversion apparatus absorbs a spike voltage around the first switching transistor Q1 or the second switching transistor Q2 by using one RC circuit, to protect each switching transistor, thereby reducing a quantity of RC circuits and areas occupied by the RC circuit, and reducing circuit costs of the direct current conversion circuit in the direct current conversion apparatus, and circuit design complexity is low.

In some feasible implementations, in the direct current conversion circuit shown in FIG. 12 or FIG. 13, the switching transistor Q1 and the switching transistor Q2 may be MOS transistors, the first connection terminals of the switching transistor Q1 and the switching transistor Q2 may be sources, and the second connection terminals of the switching transistor Q1 and the switching transistor Q2 may be drains. Alternatively, the switching transistor Q1 and the switching transistor Q2 may be IGBT transistors, the first connection terminals of the switching transistor Q1 and the switching transistor Q2 may be emitters, and the second connection terminals of the switching transistor Q1 and the switching transistor Q2 may be collectors. In other words, a first connection terminal and a second connection terminal of each switching transistor may be determined based on a specific device type. This is not limited herein.

In this application, a direct current conversion apparatus includes a direct current conversion circuit that includes a first direct current conversion unit and a second direct current conversion unit (each direct current conversion unit may be a boost circuit, a buck circuit, or the like) that are interleaved in parallel and a controller. When the direct current conversion apparatus controls, by using the controller, a first switching transistor in the first direct current conversion unit and a second switching transistor in the second direct current conversion unit to be switched from on to off, a state of the other switching transistor is controlled to remain unchanged. The direct current conversion apparatus absorbs, by using an RC circuit located between the first switching transistor and the second switching transistor, a spike voltage when the state of the first switching transistor or the second switching transistor is switched, to reduce a voltage change rate of each switching transistor, thereby avoiding occurrence of a voltage spike and electromagnetic disturbance on the switching transistor. In addition, the direct current conversion apparatus absorbs a spike voltage around the first switching transistor or the second switching transistor by using one RC circuit, to protect each switching transistor, thereby reducing a quantity of RC circuits and areas occupied by the RC circuit, and reducing circuit costs of the direct current conversion circuit in the direct current conversion apparatus, and circuit design complexity is low.

## Claims

1. A direct current conversion circuit, wherein the direct current conversion circuit comprises an RC circuit, and a first direct current conversion unit and a second direct current conversion unit that are mutually connected in parallel, the first direct current conversion unit comprises a first switching transistor and a first inductor that are connected in series, the second direct current conversion unit comprises a second switching transistor and a second inductor that are connected in series, the RC circuit comprises a resistor and a capacitor that are connected in series, and two ends of the RC circuit are respectively connected to one end of the first switching transistor in the first direct current conversion unit and one end of the second switching transistor in the second direct current conversion unit;
when a state of one of the first switching transistor and the second switching transistor is switched, the other one of the first switching transistor and the second switching transistor remains in an on or off state; and
the RC circuit is configured to absorb a spike voltage when the state of the first switching transistor or the second switching transistor is switched, to reduce a voltage change rate of the first switching transistor or the second switching transistor.

2. The direct current conversion circuit according to claim 1, wherein the direct current conversion circuit further comprises an output capacitor, and each of the first direct current conversion unit and the second direct current conversion unit comprises a switching transistor, an inductor, a capacitor, and a diode;
a first connection terminal of the switching transistor is connected to a direct current power supply through the inductor, and is connected to the output capacitor through the diode, and a first capacitor in the first direct current conversion unit and a second capacitor in the second direct current conversion unit are connected in parallel across two ends of the direct current power supply; and
a switching transistor of the first direct current conversion unit is the first switching transistor, a switching transistor of the second direct current conversion unit is the second switching transistor, and second connection terminals of the first switching transistor and the second switching transistor are grounded.

3. The direct current conversion circuit according to claim 1, wherein the direct current conversion circuit further comprises an output capacitor, and each of the first direct current conversion unit and the second direct current conversion unit comprises a switching transistor, an inductor, a capacitor, and a diode;
a first connection terminal of the switching transistor is connected to a direct current power supply through the inductor, and is connected to the output capacitor through the diode, and a first capacitor in the first direct current conversion unit and a second capacitor in the second direct current conversion unit are connected in series and then connected in parallel across two ends of the direct current power supply; and
a switching transistor of the first direct current conversion unit is the first switching transistor, a switching transistor of the second direct current conversion unit is the second switching transistor, a second connection terminal of the first switching transistor is connected to a series connection terminal of the first capacitor and the second capacitor, and a second connection terminal of the second switching transistor is grounded.

4. The direct current conversion circuit according to claim 2 or 3, wherein the RC circuit is connected between a first connection terminal of the first switching transistor and a first connection terminal of the second switching transistor, the first switching transistor and the second switching transistor are MOS transistors, the first connection terminals of the first switching transistor and the second switching transistor are drains, and the second connection terminals of the first switching transistor and the second switching transistor are sources; or
the first switching transistor and the second switching transistor are IGBT transistors, the first connection terminals of the first switching transistor and the second switching transistor are collectors, and the second connection terminals of the first switching transistor and the second switching transistor are emitters.

5. The direct current conversion circuit according to claim 1, wherein each of the first direct current conversion unit and the second direct current conversion unit comprises an output capacitor, a switching transistor, an inductor, and a diode;
one end of the inductor is connected to a first connection terminal of the switching transistor and a cathode of the diode, the other end of the inductor is connected to one end of the output capacitor, and an anode of the diode and the other end of the output capacitor are connected and grounded; and
a switching transistor of the first direct current conversion unit is the first switching transistor, a switching transistor of the second direct current conversion unit is the second switching transistor, and second connection terminals of the first switching transistor and the second switching transistor are respectively connected to a first direct current power supply and a second direct current power supply.

6. The direct current conversion circuit according to claim 1, wherein each of the first direct current conversion unit and the second direct current conversion unit comprises an output capacitor, a switching transistor, an inductor, and a diode;
one end of the inductor is connected to a first connection terminal of the switching transistor and a cathode of the diode, the other end of the inductor is connected to one end of the output capacitor, and an anode of the diode and the other end of the output capacitor are connected and grounded; and
a switching transistor of the first direct current conversion unit is the first switching transistor, a switching transistor of the second direct current conversion unit is the second switching transistor, and second connection terminals of the first switching transistor and the second switching transistor are connected to a direct current power supply.

7. The direct current conversion circuit according to claim 5 or 6, wherein the RC circuit is connected between a first connection terminal of the first switching transistor and a first connection terminal of the second switching transistor, the first switching transistor and the second switching transistor are MOS transistors, the first connection terminals of the first switching transistor and the second switching transistor are sources, and the second connection terminals of the first switching transistor and the second switching transistor are drains; or
the first switching transistor and the second switching transistor are IGBT transistors, the first connection terminals of the first switching transistor and the second switching transistor are emitters, and the second connection terminals of the first switching transistor and the second switching transistor are collectors.

8. A photovoltaic inverter, wherein the photovoltaic inverter comprises an input port, a direct current conversion circuit, and an inverter circuit, one end of the direct current conversion circuit is connected to the input port, the other end of the direct current conversion circuit is connected to a direct current end of the inverter circuit, the direct current conversion circuit comprises an RC circuit, and a first direct current conversion unit and a second direct current conversion unit that are mutually connected in parallel, the first direct current conversion unit comprises a first switching transistor and a first inductor that are connected in series, and the second direct current conversion unit comprises a second switching transistor and a second inductor that are connected in series, the RC circuit comprises a resistor and a capacitor that are connected in series, and two ends of the RC circuit are respectively connected to one end of the first switching transistor in the first direct current conversion unit and one end of the second switching transistor in the second direct current conversion unit;
when a state of one of the first switching transistor and the second switching transistor in the direct current conversion circuit is switched, the other one of the first switching transistor and the second switching transistor remains in an on or off state; and
the photovoltaic inverter is configured to absorb a spike voltage by using the RC circuit in the direct current conversion circuit when the state of the first switching transistor or the second switching transistor is switched, to reduce a voltage change rate of the first switching transistor or the second switching transistor.

9. The photovoltaic inverter according to claim 8, wherein the direct current conversion circuit further comprises an output capacitor, and each of the first direct current conversion unit and the second direct current conversion unit comprises a switching transistor, an inductor, a capacitor, and a diode; and
a first connection terminal of the switching transistor is connected to a direct current power supply through the inductor and is connected to the output capacitor through the diode, a first capacitor in the first direct current conversion unit and a second capacitor in the second direct current conversion unit are connected in parallel across two ends of the direct current power supply, a switching transistor of the first direct current conversion unit is the first switching transistor, a switching transistor of the second direct current conversion unit is the second switching transistor, and second connection terminals of the first switching transistor and the second switching transistor are grounded.

10. The photovoltaic inverter according to claim 8, wherein the direct current conversion circuit further comprises an output capacitor, and each of the first direct current conversion unit and the second direct current conversion unit comprises a switching transistor, an inductor, a capacitor, and a diode; and
a first connection terminal of the switching transistor is connected to a direct current power supply through the inductor and is connected to the output capacitor through the diode, a first capacitor in the first direct current conversion unit and a second capacitor in the second direct current conversion unit are connected in series and then connected in parallel across two ends of the direct current power supply, a switching transistor of the first direct current conversion unit is the first switching transistor, a switching transistor of the second direct current conversion unit is the second switching transistor, a second connection terminal of the first switching transistor is connected to a series connection terminal of the first capacitor and the second capacitor, and a second connection terminal of the second switching transistor is grounded.

11. The photovoltaic inverter according to claim 8, wherein each of the first direct current conversion unit and the second direct current conversion unit comprises an output capacitor, a switching transistor, an inductor, and a diode; and
one end of the inductor is connected to a first connection terminal of the switching transistor and a cathode of the diode, the other end of the inductor is connected to one end of the output capacitor, an anode of the diode and the other end of the output capacitor are connected and grounded, a switching transistor of the first direct current conversion unit is the first switching transistor, a switching transistor of the second direct current conversion unit is the second switching transistor, and second connection terminals of the first switching transistor and the second switching transistor are respectively connected to a first direct current power supply and a second direct current power supply.

12. The photovoltaic inverter according to claim 8, wherein each of the first direct current conversion unit and the second direct current conversion unit comprises an output capacitor, a switching transistor, an inductor, and a diode; and
one end of the inductor is connected to a first connection terminal of the switching transistor and a cathode of the diode, the other end of the inductor is connected to one end of the output capacitor, an anode of the diode and the other end of the output capacitor are connected and grounded, a switching transistor of the first direct current conversion unit is the first switching transistor, a switching transistor of the second direct current conversion unit is the second switching transistor, and second connection terminals of the first switching transistor and the second switching transistor are connected to a direct current power supply.
